# EUROPEAN PATENT SPECIFICATION

(11) **EP 3 270 186 B1**
(45) Date of publication and mention of the grant of the patent: **23.01.2019**
(21) Application number: 16001576.4
(22) Date of filing: 15.07.2016
(51) Int. Cl.: G01T 3/00

(54) **NEUTRON DETECTOR WITH A TRACKING UNIT**
NEUTRONENDETEKTOR MIT EINER TRACKINGEINHEIT
DÉTECTEUR DE NEUTRONS AVEC UNE UNITÉ DE SUIVI

(43) Date of publication of application: 17.01.2018
(73) Proprietor: Universität Heidelberg, 69117 Heidelberg (DE)
(72) Inventor: Köhli, Markus, 77966 Kappel-Grafenhausen (DE)
(74) Representative: Müller-Boré & Partner Patentanwälte PartG mbB

(56) References cited:
- WO-A1-2009/142856
- US-A1- 2006 017 000
- KENTARO MIUCHI ET AL: "Performance of a micro-TPC for a time-resolved neutron PSD", ARXIV.ORG, CORNELL UNIVERSITY LIBRARY, 201 OLIN LIBRARY CORNELL UNIVERSITY ITHACA, NY 14853, 27 August 2003 (2003-08-27), XP080127032, DOI: 10.1016/J.NIMA.2003.09.063
- HUNTER ET AL.: "Neutron Imaging Camera", SPIE, PO BOX 10 BELLINGHAM WA 98227-0010 USA, vol. 6954, no. 695415, 17 April 2008 (2008-04-17), XP040437157, DOI: 10.1117/12.777167

## Description

### Technical Field

The following description relates to a detector, a method and a system for detecting neutrons using a tracking unit and scintillation techniques.

### Background

Neutrons are particles with no electric charge that, thus, cannot be detected by the conventional means used for charged particles, such as looking for a track of ionization directly produced by said charged particles in a medium. Free neutrons, i.e. neutrons that are not bounded in a nucleus, can be classified according to their kinetic energy. Free neutrons that are in thermal equilibrium with a surrounding medium, or, in other words, that have a kinetic energy corresponding to the average kinetic energy of the particles of the surrounding medium are called "thermal neutrons". They are relatively slow, with a typical energy in a range between about 0.01 eV and 0.03 eV for a medium at room temperature. "Cold neutrons" can also be identified, which are neutrons in thermal equilibrium with a cold surrounding medium, i.e. a medium at a temperature lower than room temperature, so that cold neutrons have kinetic energies ranging from about 0 eV to about 0.01 eV. In the following, the term "thermal neutrons" will be used to refer to cold neutrons as well, i.e. neutrons with energies in the range between about 0 eV and about 0.03 eV.

Thermal neutrons are typically detected in an indirect manner via absorption reactions, in which a neutron interacts with a nucleus of an atom of the absorbing medium and emits ionizing particles with high kinetic energy (in the order of MeV). The ionization track of these charged particles can then be detected in different ways. Materials that have a high cross section (larger than about 50 b) for absorption of neutrons and are, thus, particularly suited for this kind of detection are e.g. helium ³He (5327 b), lithium ⁶Li (940 b), boron ¹⁰B (3840 b) and gadolinium ¹⁵⁵Gd (61000 b), ¹⁵⁷Gd (254000 b).

Conventionally, only one of the charged particles is used. An example of a neutron detector according to the state of the art is the CASCADE neutron detector, which uses a cascade of several gas electron multiplier foils which are coated with a 1-3 micrometers thick layer of neutron converter material such as ¹⁰B. The operation of the detector under normal pressure allows to construct cheap and lightweight detectors, which are easy to handle and can cover large areas. The detection efficiency is of about 10-50% for thermal neutrons and the detector provides sub microsecond absolute time resolution. Because of the low atomic number of ¹⁰B, the high energy of the charged conversion products and in its capacity as a gas detector the detector is free of gamma-ray background. However, the CASCADE neutron detector has a spatial resolution of 1 millimeter at most.

In a different technique, an absorbing material can be combined with one or more additional materials to create a neutron-sensitive scintillator. The products of the neutron absorption can further interact with the additional material(s) and cause an emission of photons, which can then be detected by e.g. a photomultiplier. However, neutron-sensitive scintillators have a poor discrimination capability against gamma-ray background. The reason is that typical scintillators can only be doped to some extent, otherwise they get blind or are mechanically not stable. Therefore, they have to be quite thick in order to have a reasonable efficiency.

Alternatively, detection electronics based on semiconductors, such as silicon, can be used to detect electrons with a good spatial resolution. However, semiconductor neutron detectors are not sufficiently radiation-hardened and are, thus, susceptible to damage.

Document US 2006/017000 A1 discloses a neutron imaging apparatus for obtaining an image of the general shape of a neutron emitting source and a bearing of the source relative to the apparatus, the apparatus comprising a chamber comprising a gas with a high probability of interacting with low energy neutrons, releasing collision products that maintain the neutron momentum, and generating ionization particles. The chamber comprises an electrode for providing an electronic signal indicative of the impact location of ionization particles on the electrode and a field to drift the ionization particles to the electrode. A readout indicates the location and time of impact of each ionization particle on the electrode; a memory stores a plurality of the electronic signals; and a computer receives and analyzes the signals and impact times and indicates the location of the source of neutrons by using back projection algorithms to calculate three-dimensional vectors indicative of the neutron path directions.

Document WO 2009/142856 A1 discloses a neutron detector including a pressure vessel, an electrically conductive field cage assembly within the pressure vessel and an imaging subsystem. A pressurized gas mixture of CF4, 3He and 4He at respective partial pressures is used. The field cage establishes a relatively large drift region of low field strength, in which ionization electrons generated by neutron-He interactions are directed toward a substantially smaller amplification region of substantially higher field strength in which the ionization electrons undergo avalanche multiplication resulting in scintillation of the CF4 along scintillation tracks. The imaging system generates two-dimensional images of the scintillation patterns and employs track- finding to identify tracks and deduce the rate and direction of incident neutrons. One or more photo-multiplier tubes record the time-profile of the scintillation tracks permitting the determination of the third coordinate.

Therefore, there is a need for a detector that can detect a neutron with greater accuracy, specifically with a high spatial and time resolution. At the same time, a good detection efficiency, scalability, suppression against gamma-ray background and radiation hardness are required.

### Summary

According to one aspect, a detector for detecting neutrons is provided. The detector comprises:
at least one converter configured to generate at least a first charged particle and a second charged particle in response to interaction with a neutron;
at least one trigger unit configured to detect the first charged particle for determining a starting time; and
a tracking unit configured to detect the second charged particle for determining a trajectory of the second charged particle on the basis of the starting time.

The detector may be particularly suitable for detecting thermal neutrons. The at least one converter may comprise a material that is configured to interact with the neutron, such as a material with a high cross section (larger than about 50 b) for absorption of neutrons. One example of such a neutron-absorbing material (also referred herein as "converter material") may be boron ¹⁰B. The converter may comprise, in one example, only the neutron-absorbing material. In another example, the converter may comprise one or more materials in addition to the neutron-absorbing material, such as boron carbide ¹⁰B₄C.

Since the number of neutrons decreases exponentially when travelling through a material, the other materials constituting the neutron detector, i.e. except the converter material, may have a low thermal neutron absorption cross section. The probability that a neutron crossing the detector interacts with the converter may then be increased. In addition, the other materials may also have a low scattering cross section, since scattering worsens the spatial resolution of the detector.

An atom of the neutron-absorbing material may be split by a neutron passing through the converter into two charged particles with detectable kinetic energy, namely above 10 keV, e.g. a few MeV. The charged particles are also referred to as "conversion particles" and may be, in some examples, ions. Because of momentum conservation, the first charged particle and the second charged particle have velocities with opposite directions. According to an example, the converter is positioned between the at least one trigger unit and the tracking unit, so that one charged particle travels towards the trigger unit and the other charged particle travels towards the tracking unit.

If the two charged particles are ions, the at least one converter should be thin, because solids have a high stopping power. In other words, the thickness of the converter should be small enough so that the charged particles can enter the trigger unit and the tracking unit. Exemplarily, the converter may comprise a thin layer of neutron-absorbing material, namely a layer in which the thickness is negligible in comparison to the other dimensions, e.g. with a thickness about or lower than 1 micrometer. For example, the converter may be a coated layer made of neutron-absorbing material and applied to the detector.

As explained, one charged particle is emitted by the converter in the trigger unit, which detects the charged particle. In one example, the trigger unit may be a scintillation detector comprising a scintillating material and at least one light sensor.

The scintillating material is a material whose particles (atoms or molecules) are excited by incident charged particles. During de-excitation photons are emitted, giving off a light. This phenomenon is called scintillation or luminescence. The light sensor may then detect the photons emitted by the scintillating material and convert the photons into electrons, producing electric signals. Examples of scintillating materials may be organic crystals, inorganic crystals, organic liquids, plastic scintillators, gaseous scintillators and glasses. Particularly, organic scintillators may be used, since they have a short decay time and a low afterglow. Alternatively, inorganic scintillators suitable for fast timing applications, such as yttrium aluminum garnet, may be used. Examples of light sensors are photomultipliers and photodiodes. Therefore, the charged particle is detected via the photon emission it causes in the scintillating material when it travels through it.

According to one example, the scintillating material and the light sensor may be in direct contact to each other. According to another example, the at least one trigger unit may further comprise at least one waveguide configured to guide the light emitted by the scintillating material to the light sensor. In other words, the waveguide may connect the scintillating material to the light sensor by enabling the light to propagate from one to the other. In one example, the trigger unit may comprise two light sensors at opposite ends of the waveguide.

In one example, the waveguide may be a plate positioned adjacent to the scintillating material plate. In other words, the waveguide and the scintillating material may be two plates substantially parallel to each other in the thickness direction and positioned next to each other, so that at least one surface of the scintillating material is adjacent to one surface of the waveguide. Exemplarily, the light sensor(s) may have a tubular shape and the waveguide may be a tapered plate that tapers downwards and/or upwards into the tube-shaped light sensor(s). The photons may then enter through a lateral surface of the waveguide and travel downward and/or upward to the light sensor(s).

According to one example, the combination of the waveguide and the scintillating material may have a reflective coating at least on the side adjacent to the converter. In other words, on the interface between the converter and the scintillating material, the scintillating material may be coated with a reflector, which allows the light to be transmitted from the converter towards the waveguide but reflects the light back when it travels in the opposite direction, i.e. from the waveguide towards the converter. An example of a reflective coating may be a metallic coating. The coating may improve the efficiency of the waveguide by at least partially preventing the light from not propagating to the light sensor. According to another example, the efficiency may be further increased by providing a reflective coating also on the side of the waveguide opposite the scintillating material. Also the coatings may be thin, e.g. around 100 nanometers, in order to allow the conversion particles through.

The combination of the scintillating material and the waveguide minimizes the quantity of the scintillating material. The scintillating material may e.g. comprise a layer with a thickness between about 5 micrometers and 100 micrometers, for example about 15 micrometers or about 5 micrometers. It is advantageous to reduce the thickness of the scintillating material because it decreases the sensitivity to gamma rays, with high-energy photons constituting the main source of background signal in neutron detection. Indeed, photons hitting the scintillator can also cause a signal when they produce knock-out electrons via the photoelectric effect, Compton scattering or pair production. However, the amount of light generated by the electrons is lower compared to that generated by ions, so that in a thin scintillator it is possible to distinguish the light generated by an ion, which indicates a neutron event, from the light generated by a knock-out electron, resulting from a photon. Therefore, the use of the waveguide provides for background suppression.

The detection of one charged particle by the trigger unit determines a starting time. In other words, the signal of the charged particle as detected by the trigger unit may enable the neutron detector to determine the point in time at which the neutron enters the neutron detector. This point in time is referred to as "trigger time" or "starting time" because time intervals may be measured with respect to this starting time, as explained later with reference to the functioning of the tracking unit. In other words, the signal of the first charged particle detected by the trigger unit is a fast signal that indicates a detection signature and generates a fast timestamp to be used as a starting point for following measurement operations.

As explained above, an atom of the neutron-absorbing material may be split by a neutron passing through the converter into two charged particles, one of which is emitted in the trigger unit. The other charged particle is instead emitted into the tracking unit.

According to one example, the tracking unit comprises a detection volume containing gas, an electrode configuration configured to generate an electric field and at least one charge-sensitive sensor.

The detection volume may comprise a gas, e.g. a gas mixture of noble gas and quencher gas. When the energy of the second charged particle emitted from the converter into the detection volume is higher than the ionization potential of the gas particles (around 30 eV), ionization takes place and electron-ion pairs are created along the trajectory of the charged particle. Therefore, a plurality of free electrons, i.e. not bound to a nucleus, is formed by the ionization in the gas. In the following, "electron" and "free electron" will be used interchangeably. The track length of the ionizing charged particle depends on the kinetic energy of the charged particle and may be in the order of millimeters.

Normally, the electron-ion pairs would recombine, attracted to each other due to the opposite charges. In order to use the ionization pairs for detection, the tracking unit may be provided with an electrode configuration that generates an electric field, such as a high electric field in a range of about 50 V/cm to about 1000 V/cm, wherein the electric field may particularly be set depending on the gas type, gas mixture and/or gas pressure. For example, the electrode configuration may comprise two electrodes at different potentials, so that one potential is positive relative to the other. The electrode at the relatively positive potential is the anode and the electrode at the relatively negative potential is the cathode. The detection volume may be at least partially enclosed by the electrode configuration so that the ionization pairs are subject to the electric field. The free electrons and gas ions, thus, move following the direction of the field on the average, with the free electrons drifting towards the anode and the ions towards the cathode, thereby at least partially preventing recombination. According to one example, the electrode configuration may comprise a field cage to make the electric field homogeneous, so that the ionization electrons drift from their point of creation to the charge-sensitive sensor without significant distortions. The field cage may comprise a plurality of conducting loops of wire enclosing the detection volume, with the loops dividing the potential from the cathode stepwise down to the anode.

Both ions and electrons (also called "ionization particles") can be used for the scope of the tracking unit. According to one example, only electrons may be used. Although the following discussion focuses on electrons, the same principles are valid for positive ions.

Exemplarily, the charge-sensitive sensor may be placed on the path of the drifting free electrons towards the anode for detecting the electrons. Additionally, a second charge-sensitive detector may be placed on the path of the drifting gas ions towards the cathode for detecting the ions.

According to one example, the charge-sensitive sensor is configured to measure a position of each of the plurality of free electrons on a plane perpendicular to the direction of the electric field and an arrival time at which the position of each of the plurality of free electrons is measured by the charge-sensitive sensor. In other words, a plurality of free electrons may be formed in the ionization process and subsequently detected singularly by the charge-sensitive sensor. Therefore, the charge-sensitive sensor detects the second charged particle via the ionization products created by the charged particle in the gas of the detection volume.

The charge-sensitive sensor is configured to measure, directly or indirectly, quantities that are used for reconstructing the trajectory of the second charged particle. For example, the charge-sensitive sensor may measure a position of an electron on a plane perpendicular to the direction of the electric field and a corresponding arrival time on the plane.

In a high, homogeneous electric field, the position of the electron on a plane perpendicular to the direction of the electric field is none other than the two-dimensional projection of the position of the electron in the moment it was formed. Since the electron is formed by the collision of the second charged particle with a gas particle, the position of the electron at its formation is substantially the same as the position of the second charged particle. In other words, the position of the electrons on a plane perpendicular to the direction of the electric field provides two of the three coordinates needed to identify the trajectory of the charged particle in the three-dimensional tracking unit. Exemplarily, the charge-sensitive sensor may itself be located in the plane perpendicular to the direction of the electric field.

Thus, the charge-sensitive sensor may be a two-dimensional sensor configured to track a two-dimensional position on a plane. In order to obtain also the third coordinate of the charged particle position, the charge-sensitive sensor may measure an arrival time of the electrons at the plane perpendicular to the direction of the electric field. As anticipated above, the arrival time may be used in combination with the starting time determined by the trigger unit. The starting time indicates the moment the second charged particle enters the tracking unit and creates its ionizing track. Measuring a time interval as the difference between the arrival time and the starting time is then equivalent to measuring the time it takes the electron to drift from its position at formation to its position on the plane.

The free electrons move with a drift velocity that depends on the electric field strength and the gas pressure, because the electric field accelerates the electron but the gas particles provide for continuous collisions. Since the drift velocity can be computed, in combination with the measured time interval it can provide the distance the electron has covered in a direction parallel to the electric field in the tracking unit, i.e. the third coordinate necessary to determine a certain position of the charged particle position along its trajectory.

If this operation is repeated for all the electrons generated along the ionization track, the trajectory of the second charged particle can be reconstructed with great accuracy. Tracing the trajectory back to the converter, i.e. extrapolating, the position at which the neutron entered the neutron detector can be determined, whereas the time information is provided by the trigger unit. Therefore, the tracking unit may be or function as a time projection chamber.

According to one example, the charge-sensitive sensor may comprise a pixel detector. The electron charge may be collected to an appropriate pixel in a grid of pixels, amplified and compared with an energy threshold. A counter of the pixel may be then increased if the electron signal is above the threshold, and the position of the pixel in the grid gives the position of the electron in the plane perpendicular to the electric field. In order to measure the arrival time, each pixel may be provided with a counting clock reference.

In order to achieve an improved signal-to-noise ratio, the tracking unit may further comprise a gas amplification stage. In one example, the gas amplification stage may be mounted on the charge-sensitive sensor (e.g. micromesh gaseous detector or InGrid detector). In another example, the gas amplification stage may be separated from the charge-sensitive sensor, e.g. a stack of gas electron multiplier foils.

To summarize, the neutron detector may comprise at least one converter coupled to a trigger unit on one side and to a tracking unit on the other side. According to one example, the neutron detector may comprise two converters, each coupled to one trigger unit. The two converters may be positioned on opposite sides of the tracking unit and the two trigger units may be positioned externally to the two converters on opposite sides of the tracking unit, each trigger unit being adjacent to one converter in a specular symmetry. In other words, the neutron detector may comprise two layered structures, each including a converter and a trigger unit. The two layered structures may be provided on opposite sides of the tracking unit, with the converters facing the tracking unit on both sides. The provision of two layered structure on opposite sides of the tracking unit increases the efficiency of the detector.

Exemplarily, the layered structures may be parallel to the direction of the electric field and, thus, perpendicular to the plane onto which the charge-sensitive sensor measures the position. In some examples, the distance between the layered structures may correspond to one dimension of the charge-sensitive sensor.

In the neutron detector, the neutron conversion leads to charged particles that ionize the gas in the detection volume of the tracking unit and generate light in the scintillating material of the trigger unit. The combination of the trigger unit and the tracking unit to detect both the charged particles created in the converter enables the neutron detector to have a high spatial resolution of about 50 micrometers on average and a good time resolution of about 10 nanoseconds. Furthermore, the detector is radiation-hard, so that it can withstand neutron hits for a long time. In addition, the detector has a good detection efficiency for thermal neutrons, which is about 7% and can be improved by combining a plurality of detectors, since the efficiency scales with the number of detectors positioned one after the other.

Indeed, according to another aspect, a system for detecting neutrons is provided. The system comprises a plurality of detectors according to the above aspect, wherein the plurality of detectors are disposed adjacent to each other in a one- or two-dimensional array.

In one example, the detectors may be disposed adjacent to each other so that the converters are parallel to each other in the direction of the thickness of the converters. In other words, the detectors may be stacked. When the detectors are positioned after one another in this direction, the detection efficiency can be increased.

Additionally or alternatively, the detectors may be disposed adjacent to each other so that the converters are parallel to each other in the direction of the width of the converters. In other words, the converters may be positioned next to each other on the same plane so that the system has a converter surface whose total area is the sum of the areas of the converters. A larger converter surface enables the system to detect more neutron events at the same time.

Thus, the system may itself be considered as a modular detector comprising a plurality of detectors that can be arranged in combination with each other.

In one example, the electric field may be applied by individual field cages around each detector. In another example, a common field cage may apply the electric field to the system as a whole.

According to a further aspect, a method of detecting neutrons is provided. The method comprises:
generating, by a converter, a first charged particle and a second charged particle in response to interaction with a neutron;
detecting, by a trigger unit, the first charged particle for determining a starting time; and
detecting, by a tracking unit, the second charged particle for determining a trajectory of the second charged particle on the basis of the starting time.

### Brief Description of the Drawings

Details of exemplary embodiments are set forth below with reference to the exemplary drawings. Other features will be apparent from the description, the drawings, and from the claims. It should be understood, however, that even though embodiments are separately described, single features of different embodiments may be combined to further embodiments.
Figure 1 shows an example of the functional layers of a neutron detector.
Figure 2 shows the physical processes occurring in an exemplary neutron detector in a not-to-scale cross section.
Figure 3 shows the cross section of Figure 2 in scale.
Figure 4 shows energy spectra of the conversion products of boron.
Figure 5 shows an example of a neutron detector.
Figure 6 shows the coordinate system of an exemplary neutron detector.
Figure 7 shows a block diagram of track reconstruction in an exemplary neutron detector.
Figure 8 shows a system comprising a plurality of neutron detectors.
Figure 9 shows another system comprising a plurality of neutron detectors.

### Detailed Description

In the following, a detailed description of examples will be given with reference to the drawings. It should be understood that various modifications to the examples may be made. Unless explicitly indicated otherwise, elements of one example may be combined and used in other examples to form new examples.

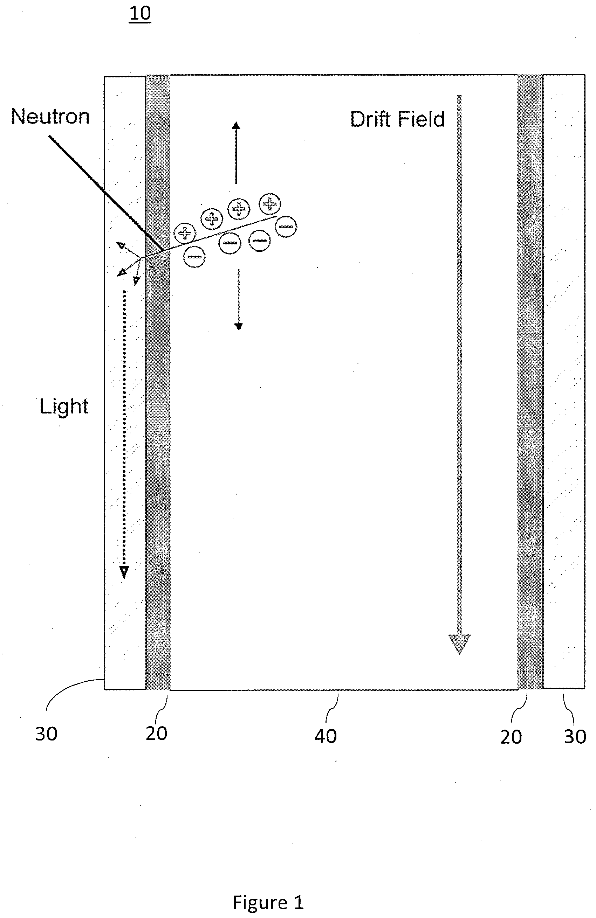

**Figure 1** shows an example of the functional layers of a neutron detector. The neutron detector 10 may comprise one or more, e.g. two, converters 20, one or more, e.g. two, trigger units 30 and at least one tracking unit 40. Although in the example of figure 1, the detector 10 has two converters 20 and two trigger units 30, in a different example the detector may have one converter 20 and one trigger unit 30.

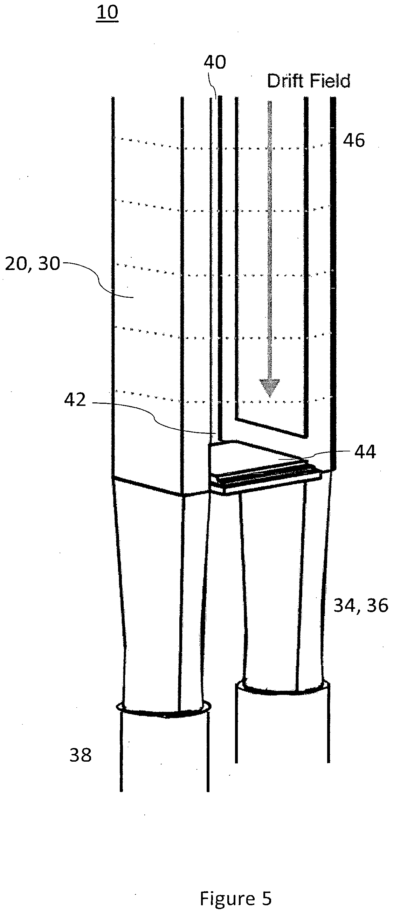

Figure 1 shows the functional principle of the detector 10, according to which a neutron interacts with the converter 20. The neutron conversion leads to two charged particles, one of which ionizes gas in the tracking unit 40, while the other generates light in the trigger unit 30. The light generated in the trigger unit 30 may be detected by a light sensor 38 (see Figure 5) and be used to determine a starting time. The free electrons in the tracking unit 40 may be subject to a drift field in the direction shown by the arrow in Figure 1 and be detected by a charge-sensitive sensor 44 (to be described later) to reconstruct the trajectory of the ionizing charged particle.

When an atom of the converter material interacts with the neutron, the two charged particles are emitted from the converter 20 in opposite directions because of momentum conservation. As shown in Figure 1, each of the converters 20 has a side facing directly the tracking unit 40, whereas the opposite side of the converter 20 faces one of the trigger units 30. In other words, the tracking unit 40 particularly is the innermost component of the detector 10, followed by the two converters 20 positioned immediately adjacent to the tracking unit 40 on two opposite sides and then by the two trigger units 30 on the exterior of the detector 10. Each converter 20 particularly is sandwiched between one trigger unit 30 and the tracking unit 40, so that one charged particle may travel towards the trigger unit 30 and the other charged particle may travel towards the tracking unit 40.

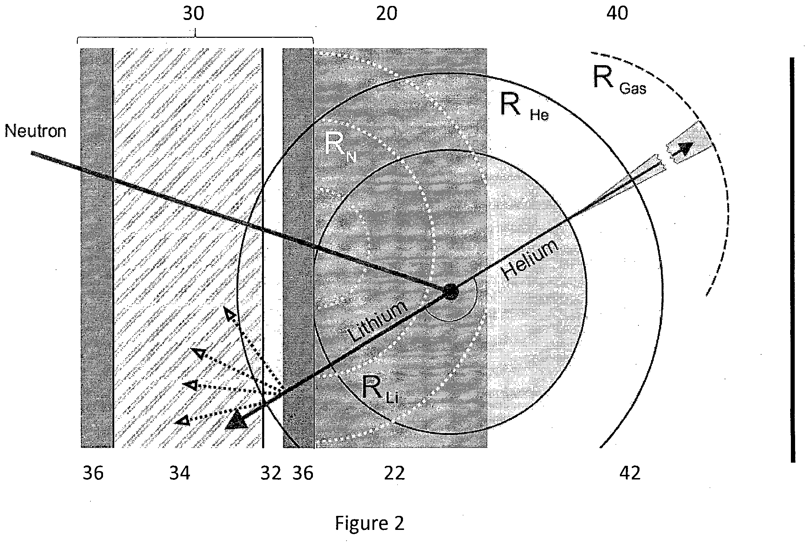

The two converters 20 as well as the two trigger units 30 particularly are identical to each other, and the detector has a mirror symmetry with respect to a vertical axis dividing the tracking unit 40 in two halves. Therefore the functioning of the detector 10 will be described with reference to one half of it, as shown in Figure 2.

**Figure 2** shows in more detail the physical processes mentioned above in a not-to-scale cross section.

The converter 20 may comprise at least one neutron-absorbing material 22, such as boron ¹⁰B. As explained, thermal neutrons are detected indirectly through the products of their interaction with nuclei of atoms of an absorbing medium, which results in ionized particles. For example, when a neutron interacts with a boron atom, two ions are produced, namely lithium Li³⁺ and helium He²⁺, with total kinetic energies of 2.3 MeV or 2.8 MeV. The particles are emitted back-to-back because of momentum conservation.

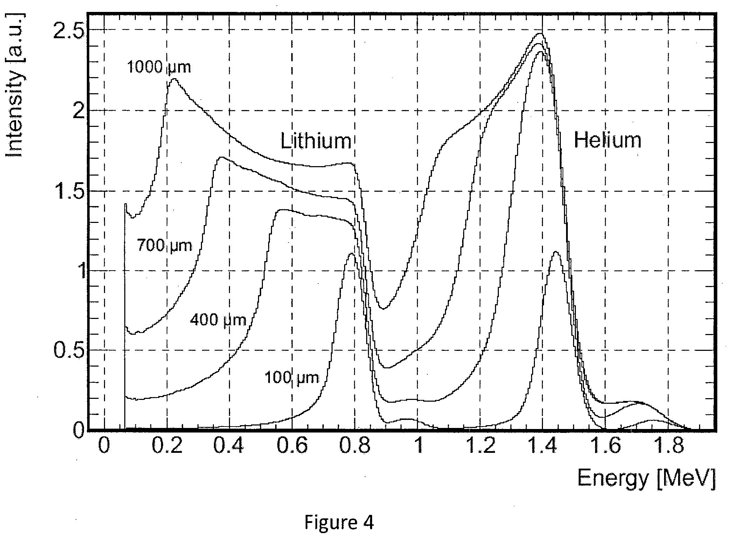

Solids have a high stopping power for ions, with the ranges for the ions in boron being between about 1.69 and about 1.90 micrometer for lithium and between about 3.27 and 4.05 micrometer for helium (continuous slowing down approximation), as represented by R_{Li} and R_{He} in Figure 2. Therefore the converter has to be thin enough to allow one ion to enter the trigger unit 30 and the other ion to enter the tracking unit 40 (see also Figure 4 below). Exemplarily, the converter 20 may consist of or comprise a layer of neutron-absorbing material 22 with a thickness of in a range between about 50 nanometers and about 2.5 micrometers, preferably between about 0.5 micrometer and about 1 micrometers. Thus, the converter 20 may be made only of neutron-absorbing material 22 like boron. In other examples, the converter 20 may also comprise other materials in addition to the neutron-absorbing material 22, e.g. the boron may be combined with carbon as in boron carbide ¹⁰B₄C for mechanical stability, manufacturing reasons or chemical reasons. In particular, the converter 20 may be a coating applied to the detector, e.g. via evaporation for ¹⁰B or via sputtering for ¹⁰B₄C.

The radius R_{N} in Figure 2 represents the range a neutron can statistically travel in material. The absorption range depends on the kinetic energy of the neutron, which is of the order of 0.01 eV for thermal neutrons. Since the number density of neutrons follows an exponential decay through the material, the materials of the neutron detector 10 other than the neutron-absorbing material 22 may exemplarily have a low absorption cross section for thermal neutrons.

Figure 2 shows the structure of the trigger unit 30. The trigger unit 30 may comprise a scintillating material 32, a waveguide 34 and two reflectors 36. The scintillating material 32 is a material whose particles are excited by incident charged particles and then emit a photon during de-excitation. Exemplarily, the scintillating material 32, such as an organic crystal, inorganic crystal, organic liquid, plastic scintillator, gaseous scintillator and/or a glass, may be in the form of a layer. According to one example, the scintillating material 32 may be organic.

As explained, the charged particle in the scintillating material 32 will cause an emission of photons, which can be detected by a light sensor 38, shown in Figure 5. The waveguide 34 guides the light emitted by the scintillating material 32 to the light sensor 38. In one example, the waveguide may be a plate of glass or quartz glass positioned adjacent to the scintillating material plate. In this description, the word "plate" is used to indicate a substantially smooth, flat, relatively thin, rigid body of substantially uniform thickness.

The combination of scintillating material 32 and waveguide 34 may be flanked on both sides by two reflectors 36 (also referred to as "reflective coatings"). The reflectors 36 cooperate with the waveguide 34 in guiding the light to the light sensor 38 by particularly preventing light to be absorbed e.g. by the converter material 22. For example, a boron coating, being black, may absorb light. Thus, the reflectors 36 increase the detection efficiency. In one example, the reflectors 36 may be metallic coatings with a thickness of the order of 100 nanometers, so that the conversion particle can pass through the reflectors 36.

The combination of the scintillating material 32 and the waveguide 34 minimizes the quantity of the scintillating material 32. The scintillating material 32 may e.g. comprise a layer with a thickness of less than about 100 micrometers, for example about 15 micrometers or about 5 micrometers. A thin scintillating material layer is less sensitive to gamma rays. Indeed, high-energy photons can also trigger a signal in the scintillating material 32, thereby mimicking a neutron signature. Hence, the use of the waveguide 34 provides for background signal suppression.

The tracking unit 40 comprises a detection volume 42 containing a fluid (particularly a gas), such as an argon-based mixture with at least 60% of argon, e.g. a mixture of argon and carbon dioxide, with an ionization energy in a range between about 10 eV and about 35 eV. The energy loss of one of the conversion charged particles leads to ionization of the gas, thereby forming pairs of gas ions and free electrons. The ionization track length depends on the kinetic energy of the charged particle and, for ions created in a boron converter, is in the order of millimeters, with a maximum of about 10 millimeters, indicated by R_{Gas} in Figure 2. A drift field, as shown in Figure 1, makes the ions and electrons move in opposite directions.

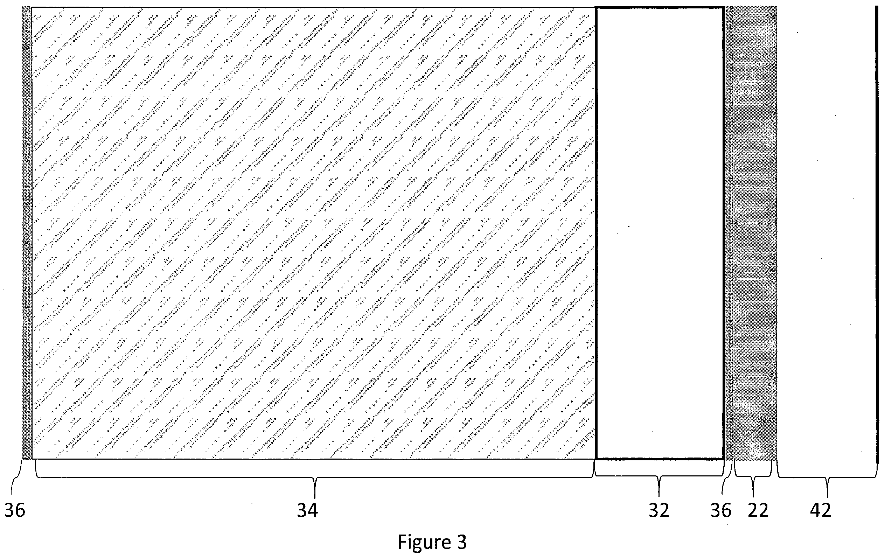

**Figure 3** shows the cross section of Figure 2 in scale, wherein only a fraction of the detection volume 42 is shown. As discussed above, the reflectors 36 may have a thickness between about 80 nanometers and about 250 nanometers (e.g. of about 100 or 200 nanometers), the waveguide 34 may have a thickness of about 14 millimeters, the scintillating material layer 32 may have a thickness of about 5 micrometers and the converter may have a thickness of about 1 micrometer. The detection volume may have a width of the order of centimeters.

**Figure 4** shows energy spectra of the conversion products of boron, helium and lithium, generated by a Monte-Carlo simulation. The graph illustrates the impact of increasing thickness of the converter layer 20.

The remaining kinetic energy after the neutron absorption leads to charged particles that exit the converter 20. The plot shows the intensity, i.e. the number of ions, as a function of the remaining kinetic energy, for helium and lithium ions with initial energies (i.e. right after the absorption) of 2.3 MeV or 2.8 MeV. The energy spectra are plotted for different thicknesses of the boron conversion layer, in the range 100-1000 micrometers in steps of 300 micrometers. It can be seen that, although in thicker converters the absorption is more likely to happen, thereby generating more ions (higher intensities), subsequent interactions with the material 22 lead to a high number of low energy ions. If the particle with the lowest energy (lithium) cannot reach either the trigger unit 30 or the tracking unit 40, with only one of the two units working the neutron information cannot be fully reconstructed, therefore the overall conversion efficiency of the device decreases (or does not increase as much with larger thicknesses).

**Figure 5** shows an example of a neutron detector comprising the layers of Figures 1 to 3. The shapes of the components of the detector 10 are not limited to the ones shown in Figure 5.

The detector 10 comprises a housing with a field cage 46, the housing enclosing the tracking unit 40. In particular, the housing encloses the detection volume 42 and a charge-sensitive sensor 44, together with the converters 20 and part of the trigger units 30. The fact that the detection volume 42 has converters 20 and trigger units 30 on two substantially opposite sides increases the efficiency of the detector.

The waveguides 34 and the reflectors 36 extend beyond the tracking unit 40 and terminate into, or are placed adjacent to, light sensors 38. Each trigger unit 30 may have two light sensors 38, one at its lower end (as shown in Figure 5) and one at its upper end (not shown in Figure 5). Alternatively, each trigger unit 30 may have only one light sensor 38.

The light sensor 38 can detect the photons emitted by the scintillating material 32 and convert the photons into electrons, producing electric signals. Examples of light sensors are photomultipliers, micro photomultipliers, silicon photomultipliers and photodiodes. Therefore, the charged particle is detected via the photon emission it causes in the scintillating material 32 when it travels through it. Exemplarily, the light sensor 38 may have a time resolution of about 10 nanoseconds.

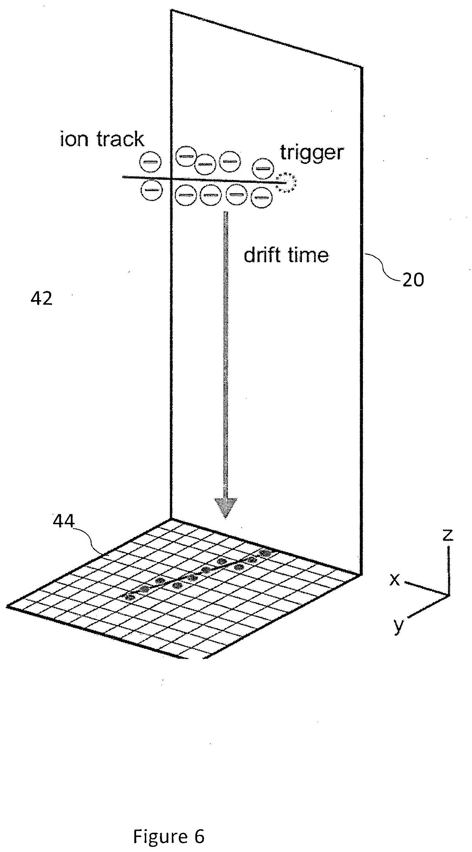

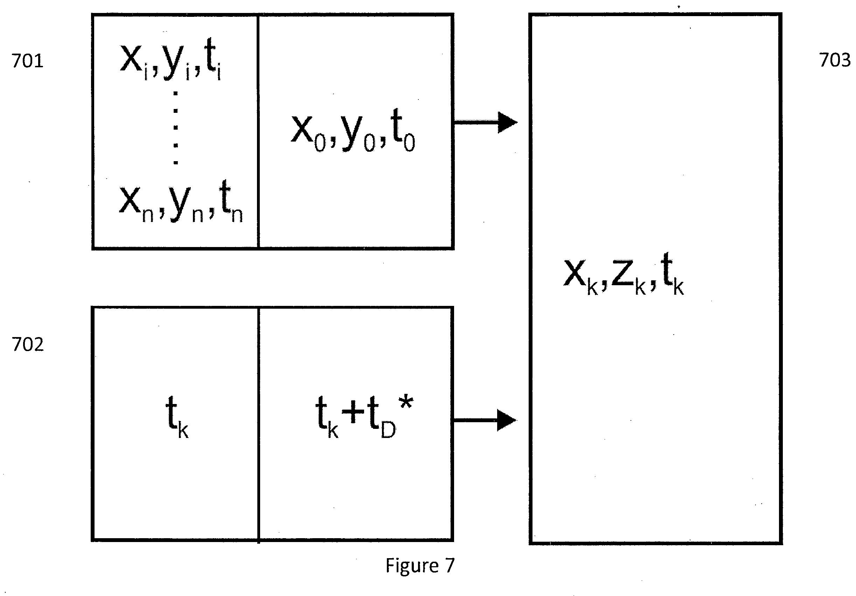

The detection of one charged particle by the trigger unit 30 via the light sensor 38 determines a starting time tₖ. How this starting time tₖ is used by the detector 10 will be explained later with reference to figures 6 and 7.

The trigger unit 30 has at least one light sensor 38 that performs the detection of the first charged particle. The tracking unit 40 has at least one charge-sensitive sensor 44 that performs the detection of the second charged particle via its ionization products.

As explained with reference to Figures 1 and 2, the charged particle ionizes the gas in the detection volume 42, forming free electrons. If a drift field as indicated by the arrow in Figure 5 is applied to the electrons, the electrons drift with a certain velocity towards the charge-sensitive sensor 44. Although not shown in Figure 5, in one example the detector 10 may comprise two charge-sensitive sensors 44, one at the bottom of the detection volume 42 and one at the top of the detection volume 42. In other words, the detector 10 may be symmetric with respect to a vertical central axis and with respect to a horizontal central axis. In the following, the charge-sensitive sensor 44 will be described with reference to the electrons but the same principles apply for ions.

The field cage 46 provides a homogeneous electric field. The field cage 46 may comprise closed loops of conducting material disposed on planes perpendicular to the direction of the electric field and equally spaced in this direction, wherein the loops enclose the detection volume 42 and the layered structures comprising the converters 20 and part of the trigger units 30.

The charge-sensitive sensor 44 measures the two-dimensional position of electrons in a plane perpendicular to the electric field and an arrival time of the electrons on such plane. How the two-dimensional coordinates and the arrival time are used by the detector 10 will be explained later with reference to figures 6 and 7.

In one example, the charge-sensitive sensor 44 may be a pixel detector. The charge of the free electrons may be collected to an appropriate pixel in a grid or matrix of pixels. A counter of the pixel may be then increased if the electron signal is above a threshold, and the position of the pixel in the grid gives the two-dimensional position of the electron in the plane perpendicular to the electric field. In order to measure the arrival time, each pixel may be provided with a counting clock reference. According to some examples, each pixel may particularly have its own clock. According to other examples, the whole pixel matrix may be read out and then each pixel may get a time stamp according to clock cycle differences to a global reference clock.

Examples of charge-sensitive detectors 44 may be the Timepix ("Timepix, a 65k programmable pixel readout chip for arrival time, energy and/or photon counting measurements", by X. Llopart at al., ScienceDirect, August 14, 2007) and Timepix3 ("Timepix3: a 65K channel hybrid pixel readout chip with simultaneous ToA/ToT and sparse readout", by T. Poikela et al., 15th International Workshop on Radiation Imaging Detectors, 23-27 June 2013, Paris).

In order to achieve an improved signal-to-noise ratio, the tracking unit 40 may further comprise a gas amplification stage. In one example, the gas amplification stage may be mounted on the charge-sensitive sensor 44 (e.g. micromesh gaseous detector or InGrid detector). In another example, the gas amplification stage may be separated from the charge-sensitive sensor 44, e.g. a stack of gas electron multiplier foils.

**Figure 6** shows the coordinate system of an exemplary neutron detector and **Figure 7** shows a block diagram of track reconstruction in this coordinate system. In particular, Figure 6 shows the detection volume 42 with the charge-sensitive sensor 44 and one converter 20.

The dotted circle on the converter 20 indicates the neutron event, whose time tₖ is determined by the trigger unit 30 positioned behind the converter 20, by detecting the photons created in the scintillating material 32 by the first charged particle. The absorption phenomenon and the scintillation phenomenon are sufficiently fast that the difference in time between the neutron entering the converter 20 and the photons reaching the light sensor 38 is negligible. This is illustrated by block 703 in Figure 7, which represents the function of the trigger unit 30, namely determining the time of the neutron event tₖ. The time resolution for tₖ depends exclusively on the light sensor resolution, which, according to the example above, is of about 10 nanoseconds.

Figure 6 also shows the second charged particle entering the detection volume 42 and its ionization trail (only the electrons are shown). Under the effect of the electric field, the electrons drift in the direction of the arrow and arrive on the charged-sensitive sensor 44. As clearly seen from Figure 6, the positions of the electrons on the two-dimensional charged-sensitive sensor 44 are the projections of the positions of the electrons along the ionization trail. In other words, the trajectory of the charged particle, which is at least partly defined by the free electrons it produces along its track, is projected on the x-y plane.

As mentioned, the absorption phenomenon is sufficiently fast that the initial point of the actual trajectory of the charged particle substantially coincides with the neutron event. If the initial point of the actual trajectory of the charged particle is characterized by coordinates (xₖ, yₖ, zₖ, tₖ) and the initial point of the projected trajectory is characterized by coordinates (x₀, y₀, z₀, t₀), xₖ = x₀. It is important to note that this condition holds true even if the charge-sensitive sensor 44 is not seamlessly attached to the converter 20, since it is the x coordinate. In other words, even if there was gap in Figure 6 between the charge-sensitive sensor 44 and the converter 20, x₀ and xₖ would still coincide.

As indicated by box 701 in Figure 7, the function of the tracking unit 40, and more specifically of the charged-sensitive sensor 44, is to measure for each electron a two-dimensional position (xᵢ, yᵢ) for i=1,....,n on a plane perpendicular to the electric field and an arrival time tᵢ on that plane. The xᵢ information is used to reconstruct the trajectory and extrapolate x₀, which, as explained above, is the x coordinate xₖ of the neutron impact position in the converter. The yᵢ position may also be extrapolated to a y₀, however, if the charge-sensitive sensor 44 is not seamlessly attached to the converter 20, y₀ would not coincide with yₖ. Therefore yₖ may be directly measured from the position of the converter layer 20 along the y axis.

The temporal information of arrival times ti is also used to extrapolate a to at which the projected trajectory starts. The difference between t₀ and tₖ is the drift time t*_{D}, which is given by the ratio between the z coordinate zₖ of the trajectory and the drift velocity, which depends on the electric field and the gas density and can, thus, be computed. Since t₀, tₖ and the drift velocity are known, zₖ can be obtained by combining the information from the trigger unit 30 and from the tracking unit 40. In box 703 of Figure 7 it is shown that the neutron event Information is obtained by combining the information from boxes 701 and 702. As explained, yₖ is determined directly from the position of the converter 20.

The spatial resolution for the neutron event may be different for the different coordinates, since they are obtained in different ways. In detail, the resolution of xₖ depends on the resolution of the charge-sensitive sensor 44, which may be around 50 micrometers. The resolution of yₖ depends on the thickness of the converter 20 and how accurately its position is measured and may be around 10 micrometers. Finally, the resolution of zₖ depends on the time resolutions of both the charged-sensitive sensor 44 and the light sensor 38 and may be around 100 micrometers.

There may be longitudinal and transversal diffusion effects in the gas. The lower the drift field strength, the more time there is for the electrons to diffuse. These effects may be negligible for the neutron detector described above, given its dimensions, so the resolution values discussed above do not account for diffusion effects.

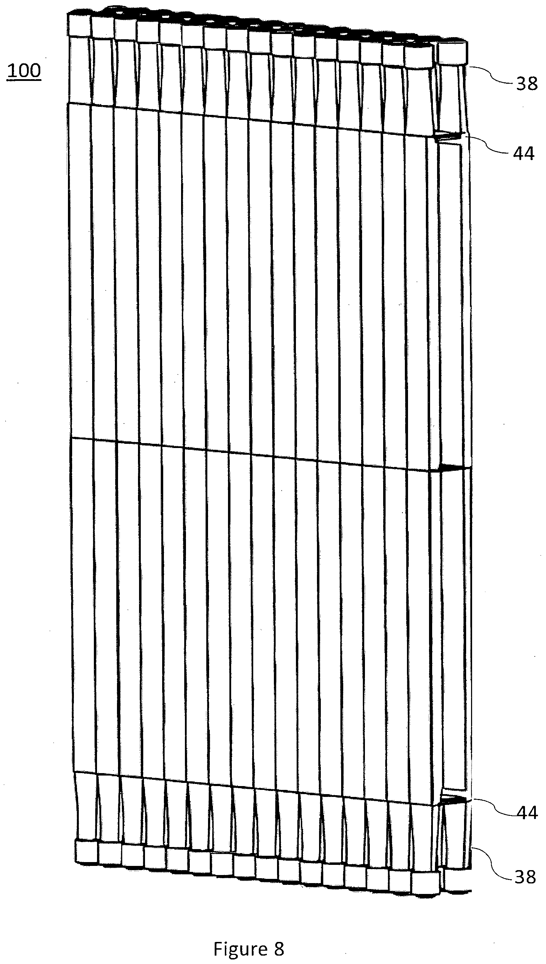

**Figure 8** shows a system comprising a plurality of neutron detectors 10 disposed adjacent to each other in a one-dimensional array, increasing the active detection area in a substantially seamless way. The electric field potential maximum is located in the central horizontal plane in order to mount the electronics, the light sensors 38 and the two-dimensional charge sensitive sensors 44 outside the active detection area. The electric field can be applied by individual field cages around each detector or in common around the whole system.

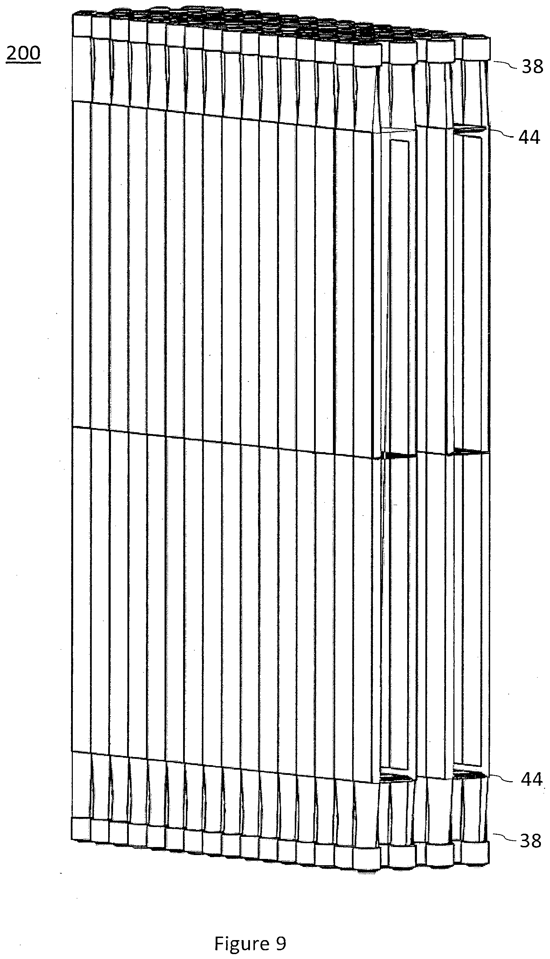

**Figure 9** shows another system comprising a plurality of neutron detectors 10 disposed adjacent to each other in a two-dimensional array. The detectors are then stacked so that four converter layers are stacked one after the other, increasing the detector efficiency. Furthermore, if the two lines of detectors are shifted with respect to each other, the blind area of the system may be decreased. In other examples, the system may comprise an array with more than two lines of detectors stacked.

## Claims

1. A detector (10) for detecting neutrons, the detector comprising:
at least one converter (20) configured to generate at least a first charged particle and a second charged particle in response to interaction with a neutron;
at least one trigger unit (30) configured to detect the first charged particle for determining a starting time; and
a tracking unit (40) configured to detect the second charged particle for determining a trajectory of the second charged particle on the basis of the starting time.

2. The detector (10) of claim 1, wherein the at least one converter (20) is positioned between the at least one trigger unit (30) and the tracking unit (40).

3. The detector (10) of claim 1 or 2, wherein the at least one trigger unit (30) comprises a scintillating material (32) and at least one light sensor (38).

4. The detector (10) of claim 3, wherein the at least one trigger unit (30) further comprises a waveguide (34) adjacent to the scintillating material (32) and at least one reflective coating (36).

5. The detector (10) of claim 3 or 4, wherein the at least one converter (20) comprises a layer having a thickness lower than 1 micrometer and the scintillating material (32) comprises a layer having a thickness lower than 100 micrometer.

6. The detector (10) of any one of claims 1 to 5, wherein the tracking unit (40) comprises:
a detection volume (42) containing gas configured to be ionized by the second charged particle so that ionization particles are formed;
an electrode configuration configured to generate an electric field; and
at least one charge-sensitive sensor (44) configured to measure:
a position of each of the plurality of ionization particles on a plane perpendicular to the direction of the electric field; and
an arrival time at which the position of each of the plurality of ionization particles is measured by the charge-sensitive sensor (44).

7. The detector (10) of claim 6, wherein the charge-sensitive sensor (44) comprises a pixel detector.

8. The detector (10) of claim 6 or 7, wherein the charge-sensitive sensor (44) is positioned on the plane perpendicular to the direction of the electric field.

9. The detector (10) of any one of claims 6 to 8, wherein the electrode configuration comprises a wire field cage (46) configured to enclose the detection volume (42).

10. The detector (10) of any one of claims 1 to 9, wherein:
the at least one converter (20) comprises two converters (20);
the at least one trigger unit (30) comprises two trigger units (30); and
the two converters (20) are positioned on opposite sides of the tracking unit (40) and the two trigger units (30) are positioned externally to the two converters (20) on opposite sides of the tracking unit (40), each trigger unit (30) being adjacent to one converter (20).

11. A system (100; 200) for detecting neutrons, the system comprising a plurality of detectors (10) according to any one of claims 1 to 10, wherein the plurality of detectors (10) are disposed adjacent to each other in a one- or two-dimensional array.

12. A method of detecting neutrons, the method comprising:
generating, by a converter (20), a first charged particle and a second charged particle in response to interaction with a neutron;
detecting, by a trigger unit (30), the first charged particle for determining a starting time; and
detecting, by a tracking unit (40), the second charged particle for determining a trajectory of the second charged particle on the basis of the starting time.

13. The method of claim 12, wherein detecting the first charged particle comprises detecting, by at least one light sensor (38) of the trigger unit (30), photons emitted by a scintillating material (32) of the trigger unit (30) when the first charged particle travels through the scintillating material (32).

14. The method of claim 12 or 13, further comprising generating, by an electrode configuration of the tracking unit (40), an electric field; and
wherein detecting the second charged particle comprises detecting, by a charge-sensitive sensor (44) of the tracking unit (40), a plurality of ionization particles produced via ionization by the second charged particle in a gas within the tracking unit (40), wherein the ionization particles move in the electric field.

15. The method of claim 14, further comprising measuring by the charge-sensitive sensor (44):
a position of each of the plurality of ionization particles on a plane perpendicular to the direction of the electric field; and
an arrival time at which the position of each of the plurality of ionization particles is measured by the charge-sensitive sensor (44).

## Patentansprüche

1. Detektor (10) zum Detektieren von Neutronen, wobei der Detektor umfasst:
zumindest einen Konverter (20), der konfiguriert ist, zumindest ein erstes geladenes Teilchen und ein zweites geladenes Teilchen als Antwort auf eine Interaktion mit einem Neutron zu erzeugen;
zumindest eine Triggereinheit (30), die konfiguriert ist, das erste geladene Teilchen zum Bestimmen einer Startzeit zu detektieren; und
eine Trackingeinheit (40), die konfiguriert ist, das zweite geladene Teilchen zum Bestimmen einer Trajektorie des zweiten geladenen Teilchens auf der Basis der Startzeit zu detektieren.

2. Detektor (10) nach Anspruch 1, wobei der zumindest eine Konverter (20) zwischen der zumindest einen Triggereinheit (30) und der Trackingeinheit (40) positioniert ist.

3. Detektor (10) nach Anspruch 1 oder 2, wobei die zumindest eine Triggereinheit (30) ein szintillierendes Material (32) und zumindest einen Lichtsensor (38) umfasst.

4. Detektor (10) nach Anspruch 3, wobei die zumindest eine Triggereinheit (30) ferner einen Wellenleiter (34) benachbart bzw. angrenzend an das szintillierende Material (32) und zumindest eine reflektierende Beschichtung (36) umfasst.

5. Detektor (10) nach Anspruch 3 oder 4, wobei der zumindest eine Konverter (20) eine Schicht mit einer Dicke von weniger als 1 Mikrometer umfasst und das szintillierende Material (32) eine Schicht mit einer Dicke von weniger als 100 Mikrometer umfasst.

6. Detektor (10) nach einem der Ansprüche 1 bis 5, wobei die Trackingeinheit (40) umfasst:
ein Detektionsvolumen (42), das Gas enthält, das konfiguriert ist, durch das zweite geladene Partikel ionisiert zu werden, so dass lonisationspartikel gebildet werden;
eine Elektrodenkonfiguration, die konfiguriert ist, ein elektrisches Feld zu erzeugen; und
zumindest einen ladungsempfindlichen Sensor (44), der konfiguriert ist zum Messen von:
einer Position von jedem der Mehrzahl von lonisationspartikeln auf einer Ebene senkrecht zu der Richtung des elektrischen Felds; und
einer Ankunftszeit, zu der die Position jedes der Mehrzahl von Ionisationspartikeln durch den ladungsempfindlichen Sensor (44) gemessen wird.

7. Detektor (10) nach Anspruch 6, wobei der ladungsempfindliche Sensor (44) einen Pixeldetektor umfasst.

8. Detektor (10) nach Anspruch 6 oder 7, wobei der ladungsempfindliche Sensor (44) auf der Ebene senkrecht zu der Richtung des elektrischen Felds positioniert ist.

9. Detektor (10) nach einem der Ansprüche 6 bis 8, wobei die Elektrodenkonfiguration einen Drahtfeldkäfig (46) umfasst, der konfiguriert ist, das Detektionsvolumen (42) zu umschließen.

10. Detektor (10) nach einem der Ansprüche 1 bis 9, wobei:
der zumindest eine Konverter (20) zwei Konverter (20) umfasst;
die zumindest eine Triggereinheit (30) zwei Triggereinheiten (30) umfasst; und
die zwei Konverter (20) auf gegenüberliegenden bzw. entgegengesetzten Seiten der Trackingeinheit (40) positioniert sind und die zwei Triggereinheiten (30) extern zu den beiden Konvertern (20) auf gegenüberliegenden bzw. entgegengesetzten Seiten der Trackingeinheit (40) positioniert sind, wobei jede Triggereinheit (30) benachbart bzw. angrenzend an einen Konverter (20) ist.

11. System (100; 200) zum Detektieren von Neutronen, wobei das System eine Mehrzahl von Detektoren (10) nach einem der Ansprüche 1 bis 10 umfasst, wobei die Mehrzahl von Detektoren (10) benachbart bzw. angrenzend zu einander in einem ein- oder zweidimensionalen Array angeordnet sind.

12. Verfahren zum Detektieren von Neutronen, wobei das Verfahren umfasst:
Erzeugen, durch einen Konverter (20), eines ersten geladenen Teilchens und eines zweiten geladenen Teilchens als Antwort auf eine Interaktion mit einem Neutron;
Detektieren, durch eine Triggereinheit (30), des ersten geladenen Teilchens zum Bestimmen einer Startzeit; und
Detektieren, durch eine Trackingeinheit (40), des zweiten geladenen Teilchens zum Bestimmen einer Trajektorie des zweiten geladenen Teilchens auf der Basis der Startzeit.

13. Verfahren nach Anspruch 12, wobei das Detektieren des ersten geladenen Teilchens, durch zumindest einen Lichtsensor (38) der Triggereinheit (30), das Detektieren von Photonen umfasst, die von einem szintillierenden Material (32) der Triggereinheit (30) emittiert werden, wenn sich das erste geladene Teilchen durch das szintillierende Material (32) bewegt.

14. Verfahren nach Anspruch 12 oder 13, ferner umfassend das Erzeugen, durch eine Elektrodenkonfiguration der Trackingeinheit (40), eines elektrischen Felds; und
wobei das Detektieren des zweiten geladenen Teilchens das Detektieren, durch einen ladungsempfindlichen Sensor (44) der Trackingeinheit (40), einer Vielzahl von lonisationspartikeln umfasst, die durch Ionisierung durch das zweite geladene Teilchen in einem Gas innerhalb der Trackingeinheit (40) erzeugt werden, wobei sich die lonisationspartikel in dem elektrischen Feld bewegen.

15. Verfahren nach Anspruch 14, ferner umfassend Messen mit dem ladungsempfindlichen Sensor (44):
einer Position von jedem der Mehrzahl von lonisationspartikeln auf einer Ebene senkrecht zu der Richtung des elektrischen Felds; und
einer Ankunftszeit, zu der die Position jedes der Mehrzahl von Ionisationspartikeln durch den ladungsempfindlichen Sensor (44) gemessen wird.

## Revendications

1. Détecteur (10) pour détecter des neutrons, le détecteur comprenant :
au moins un convertisseur (20) configuré pour générer au moins une première particule chargée et une seconde particules chargée en réponse à l'interaction avec un neutron ;
au moins un module de déclenchement (30) configuré pour détecter la première particule chargée pour déterminer une heure de démarrage ; et
un module de traçage (40) configuré pour détecter la seconde particule chargée pour déterminer une trajectoire de la seconde particule chargée en fonction de l'heure de démarrage.

2. Détecteur (10) selon la revendication 1, dans lequel l'au moins un convertisseur (20) est positionné entre l'au moins un module de déclenchement (30) et le module de traçage (40).

3. Détecteur (10) selon la revendication 1 ou 2, dans lequel l'au moins un module de déclenchement (30) comprend un matériau scintillant (32) et au moins un capteur de lumière (38).

4. Détecteur (10) selon la revendication 3, dans lequel l'au moins un module de déclenchement (30) comprend en outre un guide d'ondes (34) adjacent au matériau scintillant (32) et au moins un revêtement réfléchissant (36).

5. Détecteur (10) selon la revendication 3 ou 4, dans lequel l'au moins un convertisseur (20) comprend une couche ayant une épaisseur inférieure à 1 micromètre et le matériau scintillant (32) comprend une couche ayant une épaisseur inférieure à 100 micromètres.

6. Détecteur (10) selon l'une quelconque des revendications 1 à 5, dans lequel le module de traçage (40) comprend :
un volume de détection (42) contenant du gaz configuré pour être ionisé par la seconde particule chargée de sorte que des particules d'ionisation sont formées ;
une configuration d'électrode configurée pour générer un champ électrique ; et
au moins un capteur sensible à la charge (44) configuré pour mesurer :
une position de chacune de la pluralité de particules d'ionisation sur un plan perpendiculaire à la direction du champ électrique ; et
une heure d'arrivée à laquelle la position de chacune de la pluralité de particules d'ionisation est mesurée par le capteur sensible à la charge (44).

7. Détecteur (10) selon la revendication 6, dans lequel le capteur sensible à la charge (44) comprend un détecteur de pixels.

8. Détecteur (10) selon la revendication 6 ou 7, dans lequel le capteur sensible à la charge (44) est positionné sur le plan perpendiculaire à la direction du champ électrique.

9. Détecteur (10) selon l'une quelconque des revendications 6 à 8, dans lequel la configuration d'électrode comprend une cage de Faraday (46) configurée pour renfermer le volume de détection (42).

10. Détecteur (10) selon l'une quelconque des revendications 1 à 9, dans lequel :
l'au moins un convertisseur (20) comprend deux convertisseurs (20) ;
l'au moins un module de déclenchement (30) comprend deux modules de déclenchement (30) ; et
les deux convertisseurs (20) sont positionnés sur des côtés opposés du module de traçage (40) et les deux modules de déclenchement (30) sont positionnés de manière externe aux deux convertisseurs (20) sur des côtés opposés du module de traçage (40), chaque module de déclenchement (30) étant adjacent à un convertisseur (20).

11. Système (100 ; 200) pour détecter des neutrons, le système comprenant une pluralité de détecteurs (10) selon l'une quelconque des revendications 1 à 10, dans lequel la pluralité de détecteurs (10) sont disposés de manière adjacente l'un à l'autre dans un réseau uni- ou bidimensionnel.

12. Procédé de détection de neutrons, le procédé comprenant :
générer, par un convertisseur (20), une première particule chargée et une seconde particule chargée en réponse à l'interaction avec un neutron ;
détecter, par un module de déclenchement (30), la première particule chargée pour déterminer une heure de démarrage ; et
détecter, par un module de traçage (40), la seconde particule chargée pour déterminer une trajectoire de la seconde particule chargée en fonction de l'heure de démarrage.

13. Procédé selon la revendication 12, dans lequel détecter la première particule chargée comprend détecter, par au moins un capteur de lumière (38) du module de déclenchement (30), des photons émis par un matériau scintillant (32) du module de déclenchement (30) lorsque la première particule chargée se déplace à travers le matériau scintillant (32).

14. Procédé selon la revendication 12 ou 13, comprenant en outre générer, par une configuration d'électrode du module de traçage (40), un champ électrique ; et dans lequel détecter la seconde particule chargée comprend détecter, par un capteur sensible à la charge (44) du module de traçage (40), une pluralité de particules d'ionisation produites par le biais d'une ionisation par la seconde particule chargée dans un gaz au sein du module de traçage (40), dans lequel les particules d'ionisation se déplacent dans le champ électrique.

15. Procédé selon la revendication 14, comprenant en outre mesurer par le capteur sensible à la charge (44) :
une position de chacune de la pluralité de particules d'ionisation sur un plan perpendiculaire à la direction du champ électrique ; et
une heure d'arrivée à laquelle la position de chacune de la pluralité de particules d'ionisation est mesurée par le capteur sensible à la charge (44).
